Europäisches Patentamt

European Patent Office

Office européen des brevets

(19)

(11) Numéro de publication: **0 022 034**

**A1**

## DEMANDE DE BREVET EUROPEEN

(21) Numéro de dépôt: **80400988.4**

(22) Date de dépôt: **30.06.80**

(51) Int. Cl.³: **B 28 D 7/04**
**B 23 Q 7/14, B 61 D 3/16**

(30) Priorité: **29.06.79 FR 7917015**

(43) Date de publication de la demande:
**07.01.81 Bulletin 81/1**

(84) Etats Contractants Désignés:
**AT BE CH DE GB IT LI LU NL SE**

(71) Demandeur: **PELE & Cie**

**F-35440 Montreuil-Sur-Ille(FR)**

(72) Inventeur: **Durand, Michel**
**"Coubry"**
**F-35440 Montreuil-sur-Ille(FR)**

(74) Mandataire: **Bloch, Robert et al,**
**Cabinet ROBERT BLOCH 39 avenue de Friedland**
**F-75008 Paris(FR)**

(54) **Dispositif pour positionner des blocs de poids élevé en vue de leur usinage.**

(57) L'invention concerne un dispositif pour positionner des blocs de poids élevé (B) sur un emplacement d'usinage.

Le dispositif selon l'invention comprend un chariot mobile dans un caniveau (1) ménagé sous ledit emplacement, lequel chariot est muni de moyens de positionnement (34) des blocs.

EP 0 022 034 A1

Croydon Printing Company Ltd.

./...

Fig. 1

-\-

L'invention concerne un dispositif pour positionner des blocs de poids élevé, par exemple de plus d'une tonne, en vue de leur usinage, les blocs étant déposés sur un emplacement prévu à cet effet. L'invention s'applique en particulier au positionnement de blocs de granit brut en vue de leur sciage.

La technique traditionnelle pour positionner un bloc à débiter consiste à soulever le bloc à l'aide d'un cric, à glisser des rouleaux de bois sous le bloc et à pousser le bloc sous la scie au moyen d'un treuil ou de crics. Le positionnement horizontal et vertical du bloc par rapport à la machine se fait ensuite avec le cric et des barres à mine.

Une technique plus récente utilise un pont roulant qui soulève le bloc et le pose sur une table mobile / où s'effectue, le bloc restant accroché au pont roulant, un premier positionnement du bloc par rapport à la scie. On pousse ensuite la table avec le bloc partiellement calé, sous la scie, où l'on réalise un positionnement plus précis à l'aide d'un cric et d'une barre. La même technique peut être appliquée avec un chariot élévateur au lieu du pont roulant.

Cette technique présente l'inconvénient d'immobiliser un engin de manutention pour le positionnement du bloc. En outre, au même titre que la technique traditionnelle décrite ci-dessus, elle est lente et dangereuse étant donné que le positionnement du bloc se fait avec un cric et une barre à mine. De plus, elle exige au moins deux personnes pour sa mise en oeuvre. Enfin elle est d'autant plus malaisée que le bloc est plus lourd.

L'invention vise un dispositif pour positionner des blocs de poids élevé ne comportant aucun des inconvénients signalés plus haut, c'est-à-dire qui n'impose pas l'immobilisation de l'engin de manutention utilisé pour déposer le bloc sur l'emplacement de sciage, qui soit rapide et ne fasse courir aucun risque d'accident et qui puisse être utilisé par une seule personne sans aucune difficulté, et cela, quel que soit le poids du bloc.

Le dispositif qui fait l'objet de l'invention est caractérisé par le fait qu'il comprend un chariot mobile dans un caniveau ménagé sous ledit emplacement, lequel chariot est muni de moyens de positionnement des blocs.

Le fait d'utiliser pour le positionnement du bloc un chariot placé sous celui-ci permet de résoudre tous les problèmes susmentionnés : l'engin de manutention n'est plus nécessaire, les opérations manuelles utilisant cric et barres à mine sont supprimées et une seule personne suffit pour la manoeuvre.

L'invention sera bien comprise à la lecture de la description suivante, faite en référence aux dessins annexés.

Dans les dessins,

- la figure 1 est une vue de face d'un exemple de réalisation du dispositif de positionnement selon l'invention ;

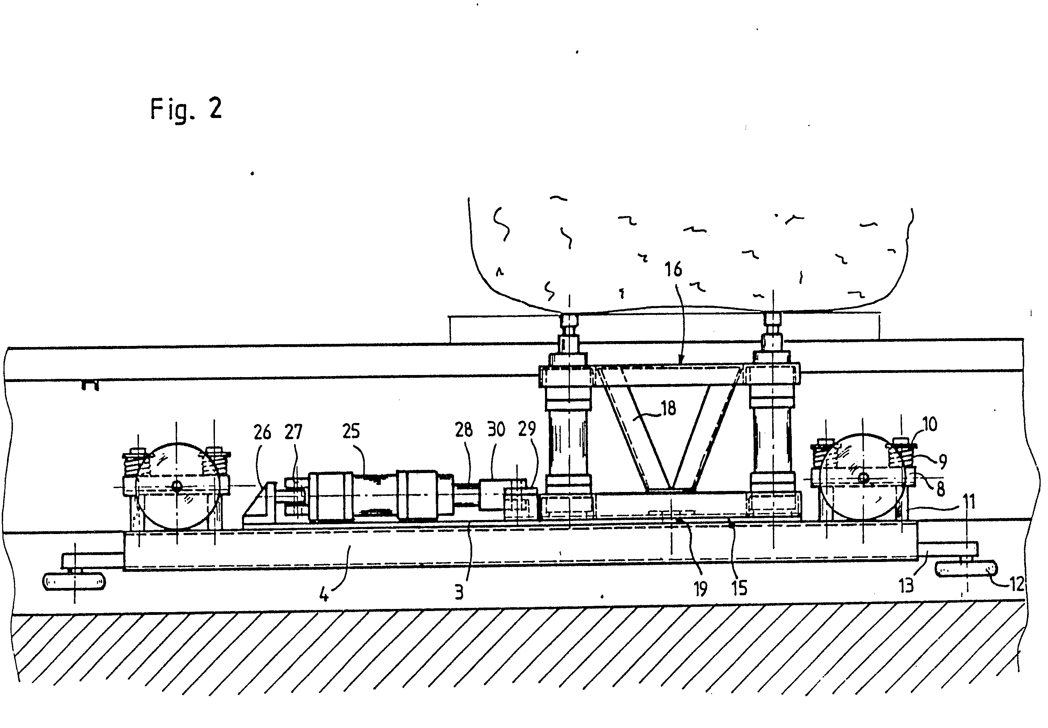

- la figure 2 est une vue de profil du dispositif de la figure 1 ;

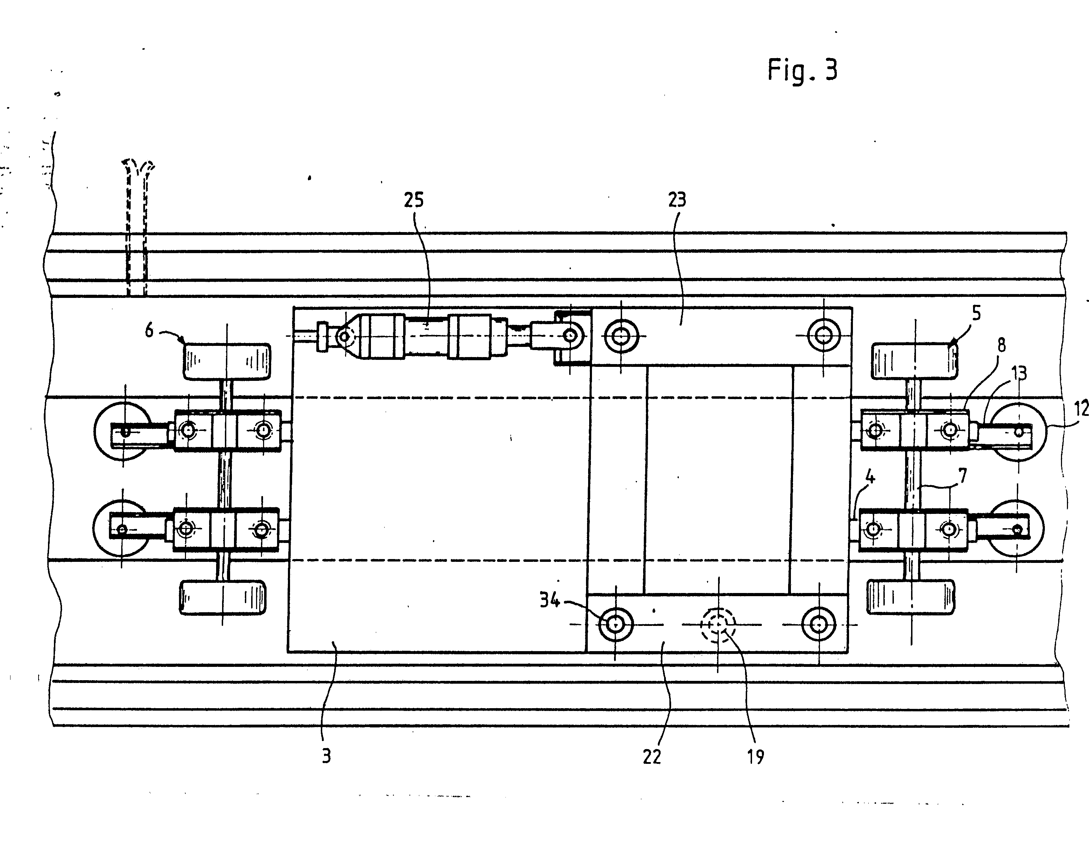

- la figure 3 est une vue de dessus du dispositif de la figure 1.

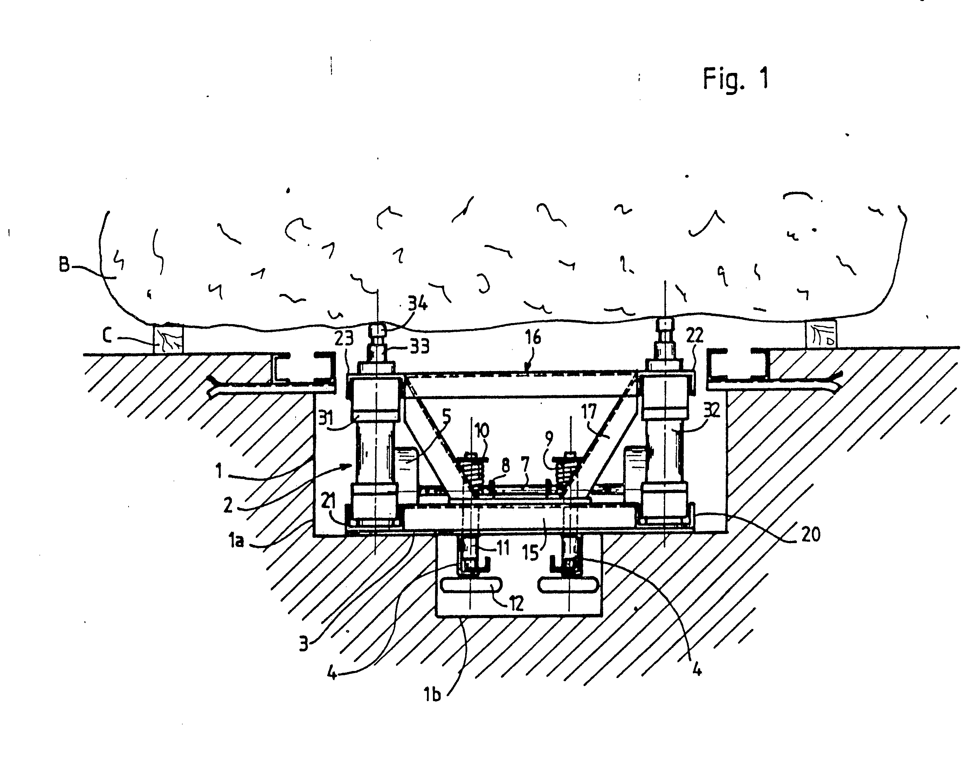

On a représenté à la figure 1 un bloc de granit B posé sur des chevrons C. Le bloc B a été déposé par un engin de manutention en vue du sciage par une scie dont l'avance s'effectue parallèlement aux chevrons C.

Un caniveau 1 est creusé dans le sol, à l'emplacement prévu pour le sciage, pour recevoir un chariot de positionnement 2.

Le caniveau 1 présente un évidement 1a de section rectangulaire et un évidement central 1b plus profond.

Le chariot 2 comporte une plate-forme 3 fixée sur deux profilés parallèles 4 disposés dans l'évidement central 1b du caniveau. Les profilés 4 ont leurs extrémités reliées à deux trains de roues 5 et 6 en contact avec le fond de l'évidement 1a du caniveau de manière à permettre le roulage en l'absence de charge et à l'empêcher si une charge est appliquée.

A cet effet, la plate-forme 3 repose sur le fond de l'évidement 1a du caniveau lorsqu'une charge lui est appliquée et d'autre part, pour chaque train de roues, l'essieu 7 est engagé dans deux pièces-supports en U 8 parallèles aux profilés 4 et servant chacune d'appui à une paire de ressorts de compression 9 dont les extrémités opposées sont en contact avec des plaques de butée 10, fixées aux extrémités supérieures de broches verticales 11 dont les extrémités inférieures sont fixées aux profilés 4.

Ainsi, lorsqu'aucune charge ne s'exerce sur la plate-forme 3, la force de rappel exercée par les ressorts 9 sur la plate-forme par l'intermédiaire des broches 11 et des profilés 4 écarte la plate-forme du fond du caniveau, ce qui permet au chariot d'être déplacé suivant le caniveau. Lorsqu'au contraire une charge est appliquée sur la plate-forme, notamment la charge constituée par le poids du bloc B, les ressorts 9 sont comprimés et la plate-forme 3 est appliquée contre le fond du caniveau.

Des galets de guidage/à axe vertical 12 sont en outre montés fous sur des pièces 13 fixées aux profilés 4 dans leur prolongement. Les galets 12 sont ainsi montés de part et d'autre des trains de roues 5 et 6.

Sur la plate-forme 3 repose le cadre inférieur 15 d'un bâti comprenant un cadre supérieur 16 relié rigidement au cadre inférieur par des jambes obliques 17, 18. De plus, le cadre inférieur 15 est relié à la plate-forme 3 par un pivot vertical 19 qui traverse ladite plate-forme et le profilé 20 qui constitue l'un des côtés longitudinaux du cadre inférieur 15.

Pour faire pivoter le bâti autour du pivot 19, il est prévu un vérin hydraulique 25 dont le cylindre est fixé à la plate-forme 3 par l'intermédiaire d'une pièce 26 et d'un axe 27, et dont l'extrémité du piston 28 est reliée au profilé longitudinal 21 du cadre inférieur par l'intermédiaire d'un axe 29 et d'une chape 30. Comme le pivot 19 et le point d'attache du vérin 25 sont placés sur des profilés opposés, respectivement 20 et 21, le déplacement du piston du vérin sous l'effet d'une pression hydraulique fait pivoter le bâti autour du pivot 19. De plus, entre les profilés longitudinaux 20, 21 du cadre inférieur 15 et les profilés longitudinaux 22, 23 du cadre supérieur 16 sont montés les cylindres de deux paires de vérins hydrauliques 31, 32. Chacun de ces vérins comporte un piston 33 dont l'extrémité libre 34 fait saillie au-delà du bâti supérieur et peut ainsi entrer en contact avec la face inférieure du bloc B. L'extrémité 34 est d'ailleurs plus large que le piston lui-même pour offrir une plus grande surface de contact.

Les quatre vérins verticaux 31, 32 sont commandés indépendamment les uns des autres, de sorte qu'on peut positionner le bloc B à la fois dans le sens longitudinal (parallèlement à la direction d'avance de la scie) et dans le sens transversal (perpendiculairement à cette direction d'avance).

En outre, le montage pivotant du bâti permet de régler l'orientation du bloc B par rapport à la direction d'avance, le vérin 25 n'étant actionné que lorsque les vérins 31, 32 sont en charge. L'amplitude du pivotement ainsi obtenu est certes limitée mais elle suffit pour le positionnement du bloc.

La commande des vérins verticaux 31, 32 et du vérin horizontal 25 est réalisée par une centrale hydraulique munie de vannes électromagnétiques. Une fois que le bloc B est correctement positionné, l'opérateur le cale et les vérins 31, 32 peuvent être rétractés pour libérer le chariot en vue du positionnement d'un autre bloc déposé en un autre endroit au-dessus du caniveau 1.

Bien entendu des modifications peuvent être apportées au dispositif décrit dans le cadre de l'invention.

Ainsi, on pourrait monter le chariot sur des rails au lieu d'utiliser le guidage par les galets 12.

# R E V E N D I C A T I O N S

1.- Dispositif pour positionner des blocs de poids élevé sur un emplacement d'usinage, caractérisé par le fait qu'il comprend un chariot mobile dans un caniveau ménagé sous ledit emplacement, lequel chariot est muni de moyens de positionnement des blocs *et de moyens assurant son immobilisation sous l'action d'une charge.*

2.- Dispositif selon la revendication 1, dans lequel le chariot porte une pluralité de vérins verticaux commandés indépendamment, agencés pour agir sur la face inférieure d'un bloc à positionner.

3.- Dispositif selon la revendication 2, dans lequel les vérins verticaux sont montés sur un bâti reposant sur une plate-forme et monté pivotant par rapport à celle-ci suivant un axe vertical, un vérin horizontal étant monté entre la plate-forme et le bâti pour faire pivoter ce dernier autour dudit axe.

4.- Dispositif selon la revendication 3, dans lequel le bâti comporte un cadre inférieur reposant sur la plate-forme et un cadre supérieur relié rigidement au cadre inférieur, les vérins verticaux ayant leur cylindre disposé entre le cadre inférieur et le cadre supérieur, l'extrémité libre des pistons faisant saillie vers le haut par rapport au cadre supérieur.

5.- Dispositif selon l'une des revendications 3 et 4, dans lequel la plate-forme est montée sur des trains de roue en contact avec le fond du caniveau par l'intermédiaire de moyens de rappel, l'agencement étant tel que la plate-forme est appliquée contre le fond du caniveau lorsqu'une charge suffisante pour vaincre l'action des moyens de rappel est appliquée sur le bâti.

6.- Dispositif selon la revendication 5, dans lequel la plate-forme est portée par des profilés reçus dans un évidement central du caniveau, les trains de roues étant reliés respectivement aux extrémités des profilés.

7.- Dispositif selon la revendication 6, dans lequel l'essieu de chacun des trains de roue est solidaire de pièces-supports dans lesquelles sont engagées des broches verticales fixées à leur extrémité inférieure aux extrémités desdits profilés, et la partie supérieure de chaque broche est entourée par un ressort de compression monté entre la pièce-support correspondante et une butée fixée à la broche.

8.- Dispositif selon la revendication 6, dans lequel des galets de guidage à axe vertical sont montés dans le prolongement desdits profilés.

Fig. 1

Fig. 2

0022034

Fig. 3

**Office européen des brevets**

**RAPPORT DE RECHERCHE EUROPEENNE**

EP 80 40 0988

| Catégorie | DOCUMENTS CONSIDERES COMME PERTINENTS | | CLASSEMENT DE LA DEMANDE (Int. Cl. 3) |
|---|---|---|---|
| | Citation du document avec indication, en cas de besoin, des parties pertinentes | Revendication concernée | |
| | FR - A - 2 390 246 (CITROEN)<br>* Figures 1,5 *<br>-- | 1,6 | B 28 D 7/04<br>B 23 Z 7/14<br>B 61 D 3/16 |
| | GB - A - 1 167 880 (YAWATA)<br>* Figures; revendications *<br>-- | 1-8 | |
| | GB - A - 1 174 790 (YAWATA)<br>* Figures; revendications *<br>-- | 1-8 | **DOMAINES TECHNIQUES RECHERCHES (Int. Cl. 3)** |
| | FR - A - 2 217 196 (MONTAN)<br>* Figures *<br>-- | 1-8 | B 28 D<br>B 23 Z<br>B 61 D |
| | DE - A - 1 944 565 (THIBAUT)<br>* Figures *<br>-- | 2-4 | |
| | US - A - 2 695 015 (COOPER)<br>* Figures; revendications *<br>-- | 1 | |
| A | DE - B - 1 300 863 (SIGUDA) | | **CATEGORIE DES DOCUMENTS CITES** |
| A | FR - A - 920 376 (FILLOUX) | | X: particulièrement pertinent |
| A | FR - A - 554 097 (FROMHOLT) | | A: arrière-plan technologique<br>O: divulgation non-écrite<br>P: document intercalaire |
| A | DE - C - 634 144 (FICKERT) | | T: théorie ou principe à la base de l'invention<br>E: demande faisant interférence |
| A | DE - A - 1 427 744 (SECOBLITZ) | | D: document cité dans la demande |
| A | FR - A - 1 576 444 (COMPIEGNE) | | L: document cité pour d'autres raisons |
| | ./. | | &: membre de la même famille, document correspondant |

⋈ Le présent rapport de recherche a été établi pour toutes les revendications

| Lieu de la recherche | Date d'achèvement de la recherche | Examinateur |
|---|---|---|
| La Haye | 15-09-1980 | SCHOOFS |

OEB Form 1503.1  06.78

Office européen
des brevets

**RAPPORT DE RECHERCHE EUROPEENNE**

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| A | FR - A - 1 580 598 (FLEYGNAC) | | |
| A | FR - A - 962 291 (MARCEROU) | | |
| A | FR - A - 646 615 (MOUETTE) | | |
| A | DE - A - 2 225 751 (ESTERER) | | |
| | ---- | | **DOMAINES TECHNIQUES RECHERCHES (Int. Cl. ³)** |